# EUROPEAN PATENT APPLICATION

(11) **EP 4 152 498 A1**
(43) Date of publication of application: **22.03.2023**
(21) Application number: 20940913.5
(22) Date of filing: 18.06.2020
(51) Int. Cl.: H01M 50/209

(54) **BATTERY HOUSING AND BATTERY PACK HAVING SAME**

(71) Applicant: DONGGUAN POWERAMP TECHNOLOGY LIMITED, Dongguan, Guangdong 523808 (CN)
(72) Inventor: WU, Mingjie, Dongguan City, Guangdong Province 523000 (CN); ZHOU, Quan, Dongguan City, Guangdong Province 523000 (CN); SHAO, Changjian, Dongguan City, Guangdong Province 523000 (CN)
(74) Representative: Icosa
(86) International application number: PCT/CN2020/096891
(87) International publication number: WO 2021/253355

(57) **Abstract**

This application discloses a battery shell, configured to accommodate a plurality of stacked cells and a circuit board. The battery shell includes a first housing and a second housing. The first housing and the second housing form an accommodation cavity to accommodate a plurality of cells and a circuit board. The first housing includes a first bottom wall, a first top wall, a first sidewall connecting the first bottom wall and the first top wall; and two first end walls connecting the first bottom wall, the first top wall, and the first sidewall. The first sidewall is provided with a first groove configured to accommodate one or more cells. The second housing includes a second bottom wall, a second top wall, a second sidewall connecting the second bottom wall and the second top wall; and two second end walls connecting the second bottom wall, the second top wall and the second sidewall. The second sidewall is provided with a second groove configured to accommodate the one or more cells. This application further discloses a battery pack with the battery shell.

## Description

### TECHNICAL FIELD

This application relates to the field of batteries, and in particular, to a battery shell and a battery pack with said battery shell.

### BACKGROUND

By virtue of characteristics such as a high energy density, being rechargeable for many cycles, and a long storage time, lithium-ion batteries embrace a great development prospect in consumer electronics, electric vehicles, smart energy storage equipment, electric bicycles, large unmanned aerial vehicles, and electric automobiles. Currently, during battery processing in the industry, a battery pack needs to undergo a sealant filling operation to fix an entire module. The sealant filling operation requires a large amount of sealant. After a battery is filled with sealant, the energy density of the battery decreases, and heat-dissipation performance is lower. In addition, the sealant filling is costly.

### SUMMARY

In view of the foregoing, it is necessary to disclose a battery shell and a battery pack with the battery shell.

An embodiment of this application discloses a battery shell, configured to accommodate a plurality of stacked cells and a circuit board. The battery shell includes a first housing and a second housing. The first housing and the second housing form an accommodation cavity configured to accommodate the plurality of cells and the circuit board. The first housing includes a first bottom wall, a first top wall, a first sidewall connecting the first bottom wall and the first top wall, and two first end walls connecting the first bottom wall, the first top wall, and the first sidewall. The first sidewall is provided with a first groove configured to accommodate one or more cells. The second housing includes a second bottom wall, a second top wall, a second sidewall connecting the second bottom wall and the second top wall, and two second end walls connecting the second bottom wall, the second top wall, and the second sidewall. The second sidewall is provided with a second groove configured to accommodate the one or more cells.

According to some embodiments of this application, the first groove is configured to accommodate one side of the one or more cells, and the second groove is configured to accommodate an opposite side of the one or more cells.

According to some embodiments of this application, contours of the first groove and the second groove match lateral contours of the one or more cells.

According to some embodiments of this application, a sealing groove is disposed on one side of a peripheral wall of at least one of the first housing or the second housing, where the side is opposite to the other housing. The sealing groove is configured to accommodate a connecting material, so as to fix the first housing to the second housing.

According to some embodiments of this application, a via hole is further disposed on a wall face of at least one of the first housing or the second housing. The via hole is configured to allow an external wire harness to extend into the accommodation cavity.

According to some embodiments of this application, at least one of the first sidewall or the second sidewall is provided with a fixing structure configured to fix the circuit board. The fixing structure is disposed between the first top wall and the first groove or between the second top wall and the second groove.

According to some embodiments of this application, at least one of the first sidewall or the second sidewall is provided with a guiding piece. The guiding piece is configured to guide the circuit board to enter the fixing structure.

According to some embodiments of this application, the first housing is provided with a snap buckle, the second housing is provided with a snap block. The snap buckle fits with the snap block to fix the first housing to the second housing.

An embodiment of this application further discloses a battery pack. The battery pack includes a battery shell and a plurality of stacked cells and a circuit board. The cells are electrically connected to the circuit board. The battery shell is the battery shell disclosed above.

According to some embodiments of this application, a thickness of each cell along a stacking direction of the cells is D1, and 14.8 mm ≤ D1 ≤ 16.8 mm.

According to some embodiments of this application, along the stacking direction of the cells, a gap between two adjacent cells is D2, and 1.6 mm ≤ D2 ≤ 3.3 mm.

According to some embodiments of this application, along the stacking direction of the cells, the plurality of cells form a cell assembly, and a thickness of the cell assembly is D3, and 211.6 mm ≤ D3 ≤ 249 mm.

According to some embodiments of this application, the gap between the cells is provided with a compressible filler. A thickness of the filler along the stacking direction of the cells is D4, and 2.5 mm ≤ D4 ≤ 3.7 mm.

According to some embodiments of this application, along the stacking direction of the cells, a spacing exists between the cell assembly and the battery shell in a thickness direction of the cell assembly. The spacing is greater than or equal to D2.

According to some embodiments of this application, a length of the battery pack in a thickness direction of the cell assembly is L, and 240 mm ≤ L ≤ 255 mm.

According to some embodiments of this application, the thickness D3 of the cell assembly satisfies 234 mm ≤ D3 ≤ 249 mm.

According to some embodiments of this application, inner walls of the first groove and the second groove are arc-shaped surfaces with a maximum radius of R1. A lateral surface of each cell is a curved surface formed of a plurality of arcs, and a maximum radius of the curved surface is R2, and R1 > R2.

According to some embodiments of this application, glue is disposed in the first groove and the second groove. A thickness of the glue is D5, and 0.2 mm ≤ D5 ≤ 1 mm.

According to some embodiments of this application, a projection of a bisection line equally divides the thickness of the cell is located at a bottom of the first groove or the second groove.

According to some embodiments of this application, the inner walls of the first groove and the second groove are arc-shaped or elliptical-arc-shaped, and the glue is disposed at the bottoms of the first groove and the second groove.

According to some embodiments of this application, the thickness of the glue is D5, and 0.25 mm ≤ D5 ≤ 0.35 mm.

According to some embodiments of this application, a gravimetric energy density ratio of the battery pack is Q, and 137 Wh/kg ≤ Q ≤ 148 Wh/kg.

According to some embodiments of this application, the cells are electrically connected to each other. The electrically connected cells are electrically connected to the circuit board.

According to some embodiments of this application, the battery pack includes a first connecting piece and a second connecting piece, the first connecting piece is connected to tabs of two adjacent cells by welding. The second connecting piece is welded to the circuit board and is connected to the first connecting piece by welding.

According to some embodiments of this application, a connecting groove is provided on an edge of the circuit board. One end of the first connecting piece extends into the connecting groove and is connected by welding to the second connecting piece extending into the connecting groove.

According to some embodiments of this application, a bonding piece is disposed in the first groove and the second groove, and is configured to fix one or more cells to the first sidewall and the second sidewall.

In the battery shell and the battery pack with the battery shell, the first groove is disposed on the first sidewall of the first housing, and the second groove is disposed on the second sidewall of the second housing. A space for accommodating the cells is formed between the first groove and the second groove, thereby accommodating and positioning the cells in the battery shell, saving the filler sealant, increasing the energy density, and reducing cost.

### BRIEF DESCRIPTION OF DRAWINGS

FIG. 1 is a schematic structural diagram of a battery pack according to an embodiment of this application;
FIG. 2 is a schematic exploded view of a structure of the battery pack shown in FIG. 1;
FIG. 3 is a schematic structural diagram of a first housing of the battery pack shown in FIG. 1;
FIG. 4 is a side view of the first housing shown in FIG. 3;
FIG. 5 is a sectional view of the battery pack shown in FIG. 1; and
FIG. 6 is a schematic structural diagram of a bushing shown in FIG. 1.

Reference numerals:
Battery pack 100
Battery shell 10
First housing 11
First bottom wall 101
First top wall 102
First sidewall 103
First end wall 104
First groove 111
First fixing groove 112
Sealing groove 113, 123
Snap buckle 114
Second housing 12
Second bottom wall 201
Second top wall 202
Second sidewall 203
Second end wall 204
Second groove 121
Snap block 124
Accommodation cavity 13
Via hole 14
Bushing 15
Harness hole 151
Explosion-proof structure 16
Explosion-proof body 161
Explosion-proof region 1611
Protective sheet 163
Maintenance structure 17
Maintenance window 171
Baffle plate 172
Cell assembly 20
Cell 21
Cell body 211
Tab 212
Circuit board 30
Connecting groove 31
Filler 40
First connecting piece 50
Second connecting piece 60

### DETAILED DESCRIPTION OF EMBODIMENTS

The following describes some embodiments of this application with reference to the drawings hereof. Evidently, the described embodiments are merely a part of but not all of the embodiments of this application.

It needs to be noted that an element referred to as being "fixed to" another element may directly exist on the other element or may be fixed to the other element through an intermediate element. An element considered to be "connected to" another element may be directly connected to the other element or may be connected to the other element through an intermediate element. An element considered to be "disposed on" another element may be directly disposed on the other element or may be disposed on the other element through an intermediate element. The terms "vertical", "horizontal", "left", "right" and similar expressions used herein are merely for ease of description.

Unless otherwise defined, all technical and scientific terms used herein have the same meanings as usually understood by a person skilled in the technical field of this application. The terms used in the specification of this application herein are merely intended for describing specific embodiments but are not intended to limit this application. The term "and/or" used herein is intended to include any and all combinations of one or more related items preceding and following the term.

Some embodiments of this application disclose a battery shell, configured to accommodate a plurality of stacked cells and a circuit board. The battery shell includes a first housing and a second housing. The first housing and the second housing form an accommodation cavity configured to accommodate the plurality of cells and the circuit board. The first housing includes a first bottom wall, a first top wall, a first sidewall connecting the first bottom wall and the first top wall, and two first end walls connecting the first bottom wall, the first top wall, and the first sidewall. The first sidewall is provided with a first groove configured to accommodate one or more cells. The second housing includes a second bottom wall, a second top wall, a second sidewall connecting the second bottom wall and the second top wall, and two second end walls connecting the second bottom wall, the second top wall, and the second sidewall. The second sidewall is provided with a second groove configured to accommodate the one or more cells.

Some embodiments of this application further disclose a battery pack. The battery pack includes a battery shell and a plurality of cells and a circuit board. The cells are electrically connected to the circuit board. The battery shell is the battery shell disclosed above.

The following describes some embodiments of this application in detail with reference to drawings. To the extent that no conflict occurs, the following embodiments and the features in the following embodiments may be combined with each other.

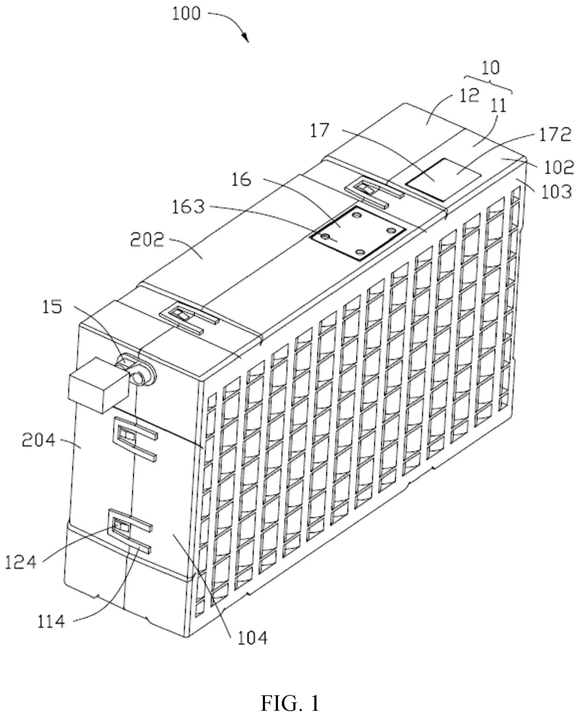

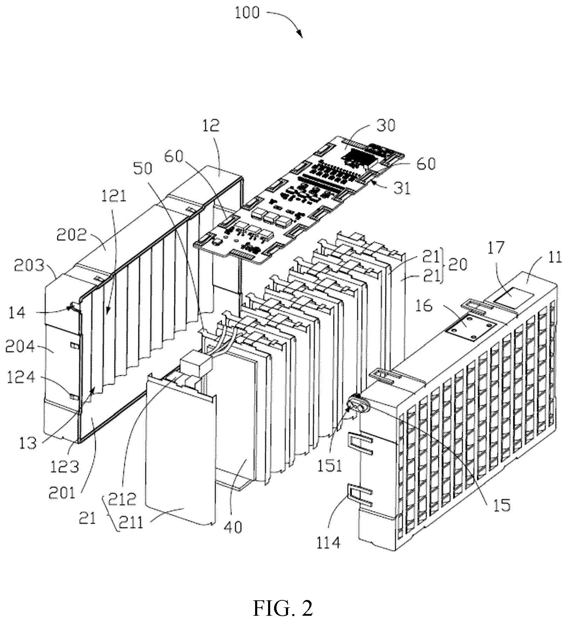

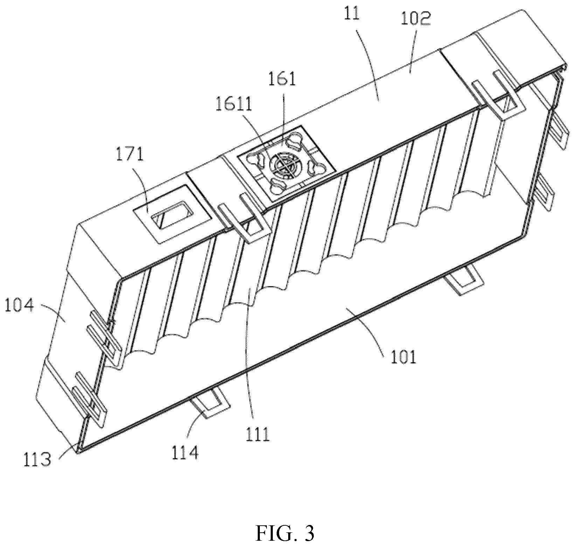

Referring to FIG. 1 to FIG. 3 concurrently, an embodiment of this application discloses a battery pack 100. The battery pack 100 includes a battery shell 10, a cell assembly 20, and a circuit board 30. The cell assembly 20 and the circuit board 30 are disposed in the battery shell 10 separately. The cell assembly 20 is electrically connected to the circuit board 30. The cell assembly 20 includes a plurality of cells 21. The circuit board 30 is provided with a battery management system.

Specifically, the battery shell 10 includes a first housing 11 and a second housing 12. The first housing 11 is connected to the second housing 12 to form an accommodation cavity 13. The accommodation cavity 13 is configured to accommodate the cell assembly 20 and the circuit board 30.

In some embodiments, the first housing 11 is fixedly connected to the second housing 12.

The first housing 11 includes a first bottom wall 101, a first top wall 102, a first sidewall 103, and two first end walls 104. The first sidewall 103 connects the first bottom wall 101 and the first top wall 102. Each of the two first end walls 104 is connected to the first bottom wall 101, the first top wall 102, and the first sidewall 103.

The second housing 12 includes a second bottom wall 201, a second top wall 202, a second sidewall 203, and two second end walls 204. The second sidewall 203 connects the second bottom wall 201 and the second top wall 202. Each of the two second end walls 204 is connected to the second bottom wall 201, the second top wall 202, and the second sidewall 203.

In the first housing 11 and the second housing 12, the accommodation cavity 13 formed by the first bottom wall 101, the first top wall 102, the first sidewall 103, the two first end walls 104, the second bottom wall 201, the second top wall 202, the second side wall 203, and the two second end walls 204 is closed.

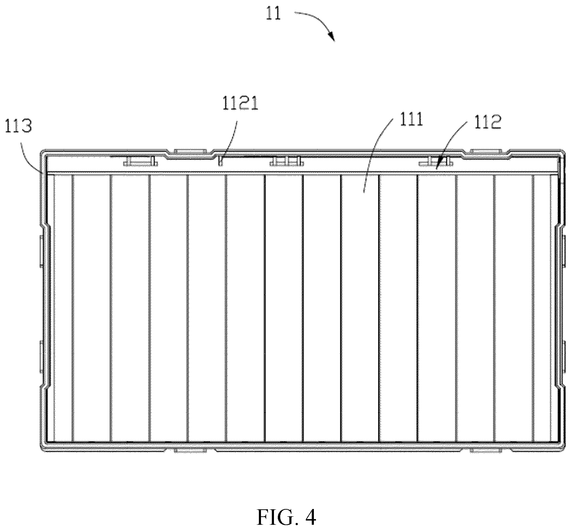

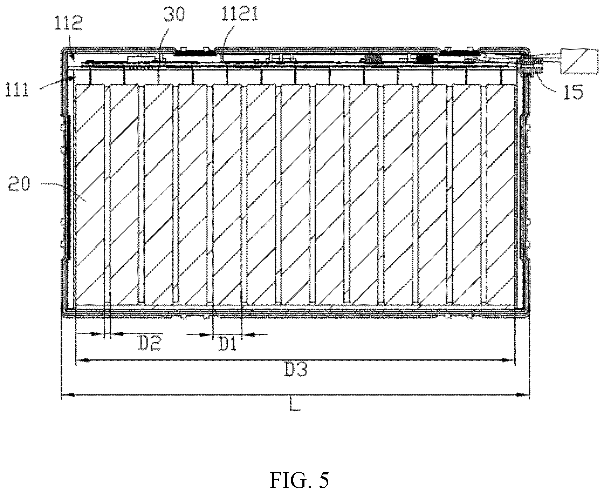

Referring to FIG. 4 and FIG.5 concurrently, the first housing 11 further includes a first groove 111. The first groove 111 is disposed on the first sidewall 103. The first groove 111 is configured to accommodate one side of one or more cells 21.

Similarly, the second housing 12 includes a second groove 121. The second groove 121 is disposed on the second sidewall 203. The second groove 121 is configured to accommodate the opposite side of the one or more cells 21. The first groove 111 on the first housing 11 and the second groove 121 on the second housing 12 together form an accommodation structure configured to accommodate and fix the cell assembly 20.

Further, contours of the first groove 111 and the second groove 121 match lateral contours of the one or more cells 21.

The first housing 11 and the second housing 12 are further provided with a fixing structure configured to fix the circuit board 30. The fixing structure includes a first fixing groove 112 disposed on the first sidewall 103 and a second fixing groove disposed on the second sidewall 203.

The first fixing groove 112 is disposed between the first top wall 102 and the first groove 111. The second fixing groove is disposed between the second top wall 202 and the second groove 121.

Specifically, the first fixing groove 112 may be jointly formed by two prop plates coordinate with the first sidewall 103, where the two prop plates extend from the first sidewall 103 toward the accommodation cavity 13 and are located between the first top wall 102 and the first groove 111.

Further, the first housing 11 and the second housing 12 are further provided with a guiding structure configured to guide the circuit board 30 into the fixing structure. The guiding structure includes a guiding piece 1121 disposed on the first sidewall 103 and a guiding piece disposed on the second sidewall 203.

In some embodiments, the guiding piece 1121 and the guiding piece on the second sidewall 203 are wedge-shaped blocks. The guiding structure may be symmetrically disposed in, but without limitation, the first fixing groove 112 and the second fixing groove.

In some embodiments, the first housing 11 is fixedly connected to the second housing 12 by a connecting material. The connecting material may be glue, tape, or the like.

Specifically, the connecting material is disposed on a peripheral wall of the first housing 11 or the second housing 12, and, when the first housing 11 is connected to the second housing 12, contacts a peripheral wall of the other housing to fix the other housing, thereby fixing the first housing 11 to the second housing 12.

In some embodiments, the peripheral wall of the first housing 11 or the second housing 12 is further provided with a sealing groove 113 or a sealing groove 123. An opening of the sealing groove 113 and an opening of the sealing groove 123 face the other housing. By filling or smearing the sealing groove 113 or the sealing groove 123 with the connecting material and then connecting the first housing 11 to the second housing 12, the first housing 11 can be fixed to the second housing 12.

In some embodiments, the first housing 11 or the second housing 12 is further provided with a via hole 14. The via hole 14 may be disposed on a wall face of any one of the first bottom wall 101, the first top wall 102, the first sidewall 103, the first end wall 104, the second bottom wall 201, the second top wall 202, the second sidewall 203, or the second end wall 204, or a junction of two wall faces. The via hole 14 is configured to allow an external wire harness to extend into the accommodation cavity 13 of the battery shell 10, so as to be connected to the circuit board 30.

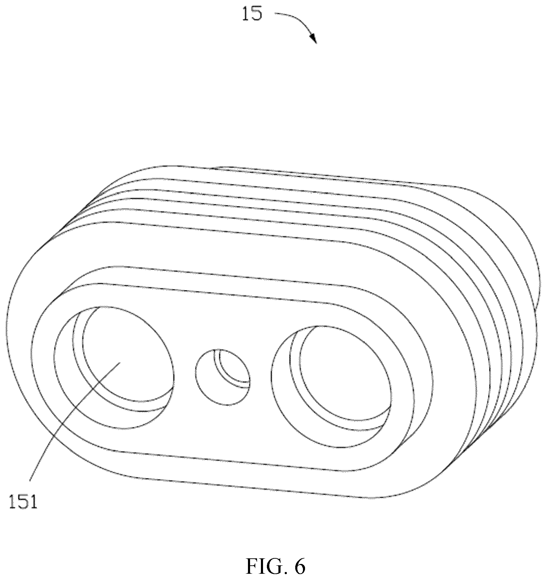

Referring to FIG. 6, in some embodiments, the battery shell 10 further includes a bushing 15. The bushing 15 is snap-fitted in the via hole 14. The bushing 15 is provided with a harness hole 151 to let the external wire harness extend into the bushing conveniently. The via hole 14 is provided on the first end wall 104 and the second end wall 204.

The gap between the bushing 15 and the first end wall 104 and the second end wall 204 is filled with the connecting material, so that the bushing 15 is fixed and sealed in the via hole 14. In the harness hole 151, the external harness extends into the harness hole 151 is fixed and sealed into the harness hole 151 by means of applying sealant or adhesive.

In some embodiments, the first housing 11 is provided with a snap buckle 114, and the second housing 12 is provided with a snap block 124. The snap buckle 114 is disposed opposite to the snap block 124, and, when the first housing 11 is connected to the second housing 12, can fix the first housing 11 to the second housing 12. In this way, there is enough time for solidifying the connecting material disposed in the sealing groove 113 or the sealing groove 123, and the first housing 11 can be fixedly connected to the second housing 12.

In some embodiments, the battery shell 10 further includes an explosion-proof structure 16. The explosion-proof structure 16 is configured to: when a cell 21 in the battery pack 100 fails, expel gas generated by the cell 21, and prevent explosion.

Specifically, the explosion-proof structure 16 is disposed on the wall face of the first housing 11 or the second housing 12. The explosion-proof structure 16 includes an explosion-proof body 161 and a film disposed on the explosion-proof body 161. The explosion-proof body 161 is disposed on the wall face of the first housing 11 or the second housing 12. The explosion-proof body 161 is provided with an explosion-proof region 1611. The film is disposed in the explosion-proof region 1611, and is fixedly connected to the explosion-proof body 161.

In some embodiments, the explosion-proof body 161 may be disposed on the first housing 11 or the second housing 12 in an integrated or detachable manner.

Preferably, the film is made of a waterproof and breathable material.

In some embodiments, the explosion-proof structure 16 further includes a protective sheet 163 disposed on the outside of the film. The protective sheet 163 is configured to protect the film on the explosion-proof body 161 against damage caused by an external object.

In some embodiments, the battery shell 10 further includes a maintenance structure 17. The maintenance structure 17 is configured to repair a component inside the battery pack 100 when a fault occurs in the battery pack 100.

Specifically, the maintenance structure 17 is disposed on the wall face of the first housing 11 or the second housing 12. The maintenance structure 17 includes a maintenance window 171 and a baffle plate 172 disposed on the maintenance window 171. The maintenance window 171 is disposed on the wall face of the first housing 11 or the second housing 12. The maintenance window 171 is provided with a maintenance region available for an operator to perform maintenance. The baffle plate 172 is hermetically disposed in the maintenance region and fixedly connected to the maintenance window 171.

In some embodiments, the maintenance window 171 may be disposed on the first housing 11 or the second housing 12 in an integrated or detachable manner.

Preferably, the baffle plate 172 is made of polycarbonate.

Preferably, the thickness of the cell 21 in the cell assembly 20 in a natural state is D1, and 14.8 mm ≤ D1 ≤ 16.8 mm. In this way, a high energy density of a single cell 21 can be ensured, and excessive expansion and deformation of the cell 21 can be prevented.

A gap between two adjacent cells 21 in the battery shell 10 of the battery pack 100 is D2, and 1.6 mm ≤ D2 ≤ 3.3 mm. The gap is filled with a filler 40 to fixedly connect the adjacent cells 21. The filler 40 is made of a compressible material. When a cell expands, the filler can be compressed to provide an expansion space for the cell. A thickness of the filler 40 in a natural state is D4, and 2.5 mm ≤ D4 ≤ 3.7 mm. In some embodiments, the filler 40 has been compressed inwardly when being assembled into the battery pack shell. In this case, the battery cell 21 is pressurized in the battery shell 10, thereby helping to increase a service life of the cell 21. In other embodiments, the filler 40 may be uncompressed, that is, the filler 40 is in a natural state when being assembled into the battery shell 10 of the battery pack 100.

In some embodiments, the filler 40 is foam.

After being assembled into the battery pack 100, the thickness of the cell assembly 20 is D3. In some embodiments, 13 cells 21 constitute a cell assembly, and a thickness of the cell assembly satisfies 211.6 mm ≤ D3 ≤ 249 mm. In some embodiments, each of the cells 21 is a pouch-type cell. The thickness of the cell assembly 20 formed of cells in a natural state may be equal to an after-assembly thickness D3, or may be greater than the after-assembly thickness D3. In this way, each cell 21 in the cell assembly 20 is evenly pressurized, and is in a slightly pressurized state in the battery pack 100.

A spacing exists between the cell assembly 20 and the battery shell 10 in the thickness direction of the cell assembly. The spacing is greater than or equal to D2, the D2 is a gap between two adjacent cells 21, so as to equalize a received expansion force.

Specifically, in some embodiments, the length of the battery shell 10 of the battery pack 100 in the thickness direction of the cell assembly 20 is L, and 240 mm ≤ L ≤ 255 mm. The thickness of the cell assembly 20 is D3, and 234 mm ≤ D3 ≤ 249 mm. It is trend to miniaturize the battery pack 100. The length the foregoing value aims to miniaturize the battery pack while maintaining a relatively high energy density of the battery pack 100.

The inner walls of the first groove 111 and the second groove 121 are arc-shaped surfaces with a maximum radius of R1. The lateral surface of each cell 21 is a curved surface formed of a plurality of arcs. A maximum radius of the curved surface is R2, and R1 > R2. Such a proportional relationship mainly aims to be compatible. Complete consistency can hardly be maintained between the cells 21 (especially pouch-type cells) during manufacturing, and the lateral surface of each cell is not an exactly regular curved surface. Therefore, the curved surface of each cell 21 may be different. The relationship of R1 > R2 ensures the largest curved surface of each cell 21 can be accommodated in the groove.

A bonding piece (not shown in the drawing) is disposed in the first groove 111 and the second groove 121. The bonding piece is configured to fix one or more cells 21 to the first sidewall 103 and the second sidewall 203. The bonding piece is very convenient to use, and helps to fix the cell 21. The bonding piece may be disposed in the groove, or may be disposed on the lateral surface of the cell 21, or may be disposed in both places.

In some embodiments, the bonding piece is glue. The thickness of the glue is D5, and 0.2 mm ≤ D5 ≤ 1 mm. Such a thickness enables compatibility with the cells 21 of different thicknesses, and enables the groove to steadily accommodate the cells 21 differ in the curved surface radius of the lateral surface. That is, when the cells 21 are assembled into the battery shell 10, the gap between the lateral curved surface of each cell 21 and the groove is fully filled with the bonding piece to prevent incomplete fixing of the cells 21.

A projection of a bisection line equally divides the thickness of the cell 21 is located at the bottom of the first groove 111 or the second groove 121, that is, located closest to the first sidewall 103 or the second sidewall 203 in the groove. This ensures that, in the thickness direction of the cells 21, the thickness of the cell 21 is equally divided by the bottom of the groove. That is, the cell 21 is centrally located inside the groove, thereby facilitating bonding of the cell 21.

In some embodiments, the inner walls of the first groove 111 and the second groove 121 are arc-shaped or elliptical-arc-shaped, and the glue is disposed at the bottoms of the first groove 111 and the second groove 121. The thickness of the glue satisfies 0.25 mm ≤ D5 ≤ 0.35 mm.

In some embodiments, the bonding piece may also be disposed on the wall surfaces of the first fixing groove 112 and the second fixing groove. In this way, the circuit board 30 is fixed after the guiding structure guides the circuit board 30 into the first fixing groove 112 and the second fixing groove.

In some embodiments, in order to make full use of space, reduce weight, and provide a relatively high energy density, the gravimetric energy density ratio of the battery pack 100 is Q, and 137 Wh/kg ≤ Q ≤ 148 Wh/kg.

The cell 21 is serially connected to another cell 21 adjacent to it by connecting positive and negative electrodes. In addition, a junction of the positive and negative electrodes of the cell 21 is electrically connected to the circuit board 30 by a connecting piece.

Specifically, the battery pack 100 further includes a first connecting piece 50 and a second connecting piece 60. Each cell 21 includes a cell body 211 and two tabs 212. The two tabs 212 are disposed on the cell body 211 and extend from the same side of the cell body 211. One of the two tabs 212 is a positive tab, and the other is a negative tab. The positive tab of the cell 21 is connected to the negative tab of the adjacent cell 21 (or the negative tab of the cell 21 is connected to the positive tab of the adjacent cell 21), and then connected to one end of the first connecting piece 50. The circuit board 30 is provided with the second connecting piece 60. Another end of the first connecting piece 50 is connected to the second connecting piece 60.

In some embodiments, the first connecting piece 50 and the second connecting piece 60 are copper plates.

Preferably, the cell 21 is connected to the tabs of the adjacent cell 21 by welding to the first connecting piece 50, for example, by laser welding.

In some embodiments, a connecting groove 31 is provided on an edge of the circuit board 30. Another of the first connecting piece 50 extends into the connecting groove 31. The second connecting piece 60 is welded to the periphery of the connecting groove 31, and one end thereof also extends into the connecting groove 31. The first connecting piece 50 extending into the connecting groove 31 is connected to the second connecting piece 60 extending into the connecting groove 31.

Preferably, the first connecting piece 50 and the second connecting piece 60 extend into the connecting groove 31 are connected by laser welding.

During assembling, a plurality of cells 21 are sequentially bonded together by the filler 40. Then the positive tab and the negative tab of adjacent cells 21 are connected by the first connecting piece 50 by welding. Then the first connecting piece 50 is welded to the second connecting piece 60, and the cell 21 and the circuit board 30 are put together into a glued groove or fixing groove of the first housing 11 or the second housing 12. A bushing in which a wire harness is fixed is put into a via hole 14, and is fixed by applying glue. Finally, glue is applied in the sealing groove, and the other housing is snap-fitted onto the housing in which the cells 21 and the circuit board 30 are mounted. After the glue is applied and solidified, the assembling of the battery pack is implemented.

In the battery shell 10 and the battery pack 100 with the battery shell 10, the first groove 111 is disposed on the first housing 11, and the second groove 121 is disposed on the second housing 12. An accommodation space that matches the contours of the cell 21 is formed between the first groove 111 and the second groove 121. In this way, the cells 21 are accommodated and positioned in the battery shell 10. The cell 21 can be fixed in the accommodation space by means such as gluing, thereby saving the filler sealant, increasing the energy density, and reducing cost.

The foregoing embodiments are merely intended for describing the technical solutions of this application but not intended as a limitation. Although this application is described in detail with reference to the foregoing optional embodiments, a person of ordinary skill in the art understands that modifications or equivalent substitutions may be made to the technical solutions of this application without departing from the spirit and essence of the technical solutions of this application.

## Claims

1. A battery shell, configured to accommodate a plurality of stacked cells and a circuit board, wherein the battery shell comprises a first housing and a second housing;
the first housing and the second housing form an accommodation cavity configured to accommodate the plurality of cells and the circuit board;
the first housing comprises a first bottom wall, a first top wall, a first sidewall connecting the first bottom wall and the first top wall, and two first end walls connecting the first bottom wall, the first top wall, and the first sidewall;
the first sidewall is provided with a first groove configured to accommodate one or more cells;
the second housing comprises a second bottom wall, a second top wall, a second sidewall connecting the second bottom wall and the second top wall, and two second end walls connecting the second bottom wall, the second top wall, and the second sidewall; and
the second sidewall is provided with a second groove configured to accommodate the one or more cells.

2. The battery shell according to claim 1, wherein the first groove is configured to accommodate one side of the one or more cells, and the second groove is configured to accommodate an opposite side of the one or more cells.

3. The battery shell according to claim 2, wherein contours of the first groove and the second groove match lateral contours of the one or more cells.

4. The battery shell according to claim 1, wherein a sealing groove is disposed on one side of a peripheral wall of at least one of the first housing or the second housing, wherein the side is opposite to the other housing, and the sealing groove is configured to accommodate a connecting material, so as to fix the first housing to the second housing.

5. The battery shell according to claim 1, wherein a via hole is disposed on a wall face of at least one of the first housing or the second housing, and the via hole is configured to allow an external wire harness to extend into the accommodation cavity.

6. The battery shell according to claim 2, wherein at least one of the first sidewall or the second sidewall is provided with a fixing structure configured to fix the circuit board, and the fixing structure is disposed between the first top wall and the first groove or between the second top wall and the second groove.

7. The battery shell according to claim 6, wherein at least one of the first sidewall or the second sidewall is provided with a guiding piece, and the guiding piece is configured to guide the circuit board to enter the fixing structure.

8. The battery shell according to claim 1, wherein the first housing is provided with a snap buckle, the second housing is provided with a snap block, and the snap buckle fits with the snap block to fix the first housing to the second housing.

9. A battery pack, comprising the battery shell (10) according to any one of claims 1 to 7; the plurality of stacked cells and the circuit board wherein the cells are electrically connected to the circuit board30).

10. The battery pack according to claim 9, wherein a thickness of each cell along a stacking direction of the cells is D1, and 14.8 mm ≤ D1 ≤ 16.8 mm.

11. The battery pack according to claim 10, wherein, along the stacking direction of the cells, a gap between two adjacent cells is D2, and 1.6 mm ≤ D2 ≤ 3.3 mm.

12. The battery pack according to claim 11, wherein, along the stacking direction of the cells, the plurality of cells form a cell assembly, and a thickness of the cell assembly is D3, and 211.6 mm ≤ D3 ≤ 249 mm.

13. The battery pack according to claim 11, wherein the gap between the cells is provided with a compressible filler, and a thickness of the filler along the stacking direction of the cells is D4, and 2.5 mm ≤ D4 ≤ 3.7 mm.

14. The battery pack according to claim 13, wherein, along the stacking direction of the cells, a spacing exists between the cell assembly and the battery shell in a thickness direction of the cell assembly, and the spacing is greater than or equal to D2.

15. The battery pack according to claim 12, wherein, a length of the battery pack in a thickness direction of the cell assembly is L, and 240 mm ≤ L ≤ 255 mm.

16. The battery pack according to claim 12, wherein the thickness D3 of the cell assembly satisfies 234 mm ≤ D3 ≤ 249 mm.

17. The battery pack according to any one of claims 10 to 16, wherein inner walls of the first groove and the second groove are arc-shaped surfaces with a maximum radius of R1, a lateral surface of each cell is a curved surface formed of a plurality of arcs, and a maximum radius of the curved surface is R2, wherein R1 > R2.

18. The battery pack according to claim 17, wherein glue is disposed in the first groove and the second groove, and a thickness of the glue is D5, and 0.2 mm ≤ D5 ≤ 1 mm.

19. The battery pack according to claim 18, wherein a projection of a bisection line equally divides the thickness of the cell is located at a bottom of the first groove or the second groove.

20. The battery pack according to claim 19, wherein the inner walls of the first groove and the second groove are arc-shaped or elliptical-arc-shaped, and the glue is disposed at the bottoms of the first groove and the second groove.

21. The battery pack according to claim 20, wherein the thickness of the glue is D5, and 0.25 mm ≤ D5 ≤ 0.35 mm.

22. The battery pack according to claim 9, wherein a gravimetric energy density ratio of the battery pack is Q, and137 Wh/kg ≤ Q ≤ 148 Wh/kg.

23. The battery pack according to claim 9, wherein the cells are electrically connected to each other, and the electrically connected cells are electrically connected to the circuit board.

24. The battery pack according to claim 23, wherein the battery pack comprises a first connecting piece and a second connecting piece, the first connecting piece is connected to tabs of two adjacent cells by welding, and the second connecting piece is welded to the circuit board and is connected to the first connecting piece by welding.

25. The battery pack according to claim 24, wherein a connecting groove is provided on an edge of the circuit board, and one end of the first connecting piece extends into the connecting groove and is connected by welding to the second connecting piece extending into the connecting groove.

26. The battery pack according to claim 9,wherein a bonding piece is disposed in the first groove and the second groove, and is configured to fix one or more cells to the first sidewall and the second sidewall.
